# FASCICULE DE BREVET EUROPEEN

(11) **EP 0 649 862 B1**
(45) Date de publication et mention de la délivrance du brevet: **25.02.1998**
(21) Numéro de dépôt: 94202958.8
(22) Date de dépôt: 12.10.1994
(51) Int. Cl.: C08F 14/06, C08F 2/38

(54) **Procédé pour la polymérisation radicalaire du chlorure de vinyle à pH acide en dispersion aqueuse**
Verfahren zur Radikalpolymerisation von Vinylchloride in wässriger Dispersion mit saurem PH
Process for radically polymerising vinyl chloride in aquous dispersion at acidil PH

(30) Priorité: 21.10.1993 BE 9301120
(43) Date de publication de la demande: 26.04.1995
(73) Titulaire: SOLVAY (Société Anonyme), B-1050 Bruxelles (BE)
(72) Inventeur: Martin, Roland, B-1150 Bruxelles (BE); Noel, Stéphane, B-1850 Grimbergen (BE)
(74) Mandataire: Marckx, Frieda

(56) Documents cités:
- BE-A- 837 070
- FR-A- 2 062 531
- US-A- 3 642 756
- US-A- 4 180 634
- INTERNATIONAL POLYMER SCIENCE AND TECH., VOL.3, no 6, T/46, 1976: G. P. Gladyshev et al.: "Controlling the polymerisation rate of vinyl chloride with weak inhibitors"

## Description

La présente invention concerne un procédé pour la polymérisation radicalaire du chlorure de vinyle à pH acide en dispersion aqueuse. Elle concerne plus particulièrement un procédé dans lequel la polymérisation radicalaire est initiée à l'aide d'initiateurs oléosolubles et la température du milieu de polymérisation est régulée directement.

La polymérisation radicalaire du chlorure de vinyle à l'intervention d'initiateurs oléosolubles de la polymérisation radicalaire constitue une technique de polymérisation bien connue pour la fabrication de polymères du chlorure de vinyle. Elle est généralement réalisée en discontinu et à pH acide avec réglage de la température du milieu aqueux de polymérisation via une double enveloppe entourant le réacteur dans laquelle circule en navette un fluide réfrigérant, le plus souvent de l'eau. Toutefois, la vitesse de la réaction de polymérisation du chlorure de vinyle et dès lors la quantité de calories à évacuer du réacteur n'est généralement pas constante tout au long du cycle de polymérisation. Il est bien connu qu'il se produit un phénomène d'autoaccélération, généralement peu avant ou en début de la chute de pression, lorsque le milieu est riche en phase gel et ne s'est pas encore appauvri en chlorure de vinyle, ce qui se traduit par un pic de température du fluide réfrigérant circulant en navette dans la double enveloppe. Ce phénomène d'auto-accélération est d'autant plus important que la température de polymérisation est faible. Le problème en cause est donc particulièrement aigu dans la fabrication de polymères du chlorure de vinyle de poids moléculaires élevés. Dans la pratique courante, on fixe donc la quantité d'initiateur mis en oeuvre à une valeur telle que l'on conserve le contrôle de la température de polymérisation au cours de la période où le phénomène d'autoaccélération est le plus intense. On se contente dans ce cas d'une sous-utilisation de la capacité de refroidissement des réacteurs pendant la première partie du cycle de polymérisation. Ces mesures sont indispensables pour des raisons de sécurité, de qualité et de reproductibilité de la qualité des résines.

On a déjà proposé divers moyen pour améliorer la productivité des réacteurs de polymérisation du chlorure de vinyle en dispersion aqueuse. Parmi ceux-ci figure la mise en oeuvre de systèmes d'initiateurs oléosolubles comprenant un initiateur rapide, utilisé à faible dose, et un autre initiateur moins rapide utilisé à dose plus élevée (cf par exemple le brevet belge 756 976 déposé le 2 octobre 1970). Toutefois, l'amélioration de la productivité n'est pas très importante, étant donné la nécessité impérative de limiter la quantité d'initiateur rapide de telle sorte que celui-ci soit totalement consommé avant que le phénomène d'autoaccélération ne devienne important et risque de rendre difficile le contrôle thermique de la réaction de polymérisation.

On a également déjà proposé d'améliorer la productivité des réacteurs par l'injection dans le milieu de polymérisation de composés retardateurs de la polymérisation, encore appelés "suppresseurs de pic", tels que par exemple, des composés hydroquinoniques ou des hydroxyphénols (cf par exmple le brevet USA-A- 3 642 756). Ces retardateurs de polymérisation qui présentent un effet inhibiteur faible à moyen de la polymérisation radicalaire du chlorure de vinyle ont une action persistante et, par ailleurs, croissante avec le taux de conversion. S'ils permettent effectivement une certaine régularisation du profil de température, plus particulièrement au moment du "pic", ils présentent néanmoins l'inconvénient de freiner la polymérisation en phase de chute de pression lorsque survient le ralentissement de la polymérisation en raison de l'appauvrissement du milieu en chlorure de vinyle. Dans ce cas également, l'amélioration de la productivité n'est pas très élevée.

La présente invention vise à procurer un procédé perfectionné permettant la régulation thermique de la polymérisation du chlorure de vinyle avec une amélioration très significative de la productivité du réacteur de polymérisation.

A cet effet, l'invention concerne un procédé pour la polymérisation radicalaire du chlorure de vinyle à pH acide en dispersion aqueuse à l'intervention d'initiateurs oléosolubles, caractérisé en ce que la température du milieu de polymérisation est régulée essentiellement par injection directe et modulée d'une quantité efficace d'un inhibiteur inorganique fort de la polymérisation radicalaire ou d'un précurseur d'un tel inhibiteur.

Par inhibiteur inorganique fort de la polymérisation radicalaire, on entend désigner aux fins de la présente invention tout composé inorganique provoquant à très faible dose unique, soit une dose unique ne dépassant pas environ 25 parties en poids par million (ppm) par rapport au chlorure de vinyle, un arrêt instantané complet de la polymérisation pendant un laps de temps limité. En pratique, la durée d'arrêt de la polymérisation est directement proportionnelle à la quantité d'inhibiteur mise en oeuvre et inversément proportionnelle à celle en initiateur.

Par opposition aux inhibiteurs inorganiques forts tels que définis ci-dessus, les retardateurs de polymérisation de l'art antérieur sont des inhibiteurs faibles qui ne conduisent, dans les mêmes conditions, qu'à un ralentissement de la polymérisation avec un effet plus durable dans le temps.

A titre d'exemples d'inhibiteurs inorganiques forts utilisables dans le procédé de l'invention, on peut mentionner l'iode et le monoxyde d'azote, ainsi que leurs précurseurs respectifs, en l'occurence, les iodures et les nitrites des métaux alcalins. Par précurseur, on entend désigner les composés aptes à former l'inhibiteur fort in situ dans les conditions de la polymérisation. C'est ainsi que dans les conditions de la polymérisation en dispersion aqueuse du chlorure de vinyle à pH acide (c'est-à-dire à un pH ne dépassant 7), les nitrites alcalins se décomposent en formant du monoxyde d'azote. Par ailleurs, la transformation in situ des iodures alcalins en iode peut être obtenue par addition au milieu réactionnel de composés peroxydés en quantité appropriée, tels que par exemple, de l'eau oxygénée ou encore des composés peroxydés organiques présentant une certaine solubilité dans l'eau.

L'inhibiteur inorganique fort (ou son précurseur) est avantageusement mis en oeuvre sous la forme de solutions aqueuses très diluées, ce qui permet un dosage très fin de l'inhibiteur fort (ou de son précurseur) et la régulation thermique du milieu de polymérisation par l'injection momentanée, au moment approprié, de quantités infimes d'inhibiteur fort (ou de son précurseur). La concentration des solutions aqueuses utilisées n'est pas critique. Pour fixer les idées, celles-ci peuvent contenir de 0,1 à 5 g/l environ d'inhibiteur (ou les quantités équivalentes en précurseur), plus particulièrement de 0,5 à 2 g/l environ.

En raison de leur solubilité très élevée dans l'eau, la préférence est donnée à la mise en oeuvre des iodures et des nitrites des métaux alcalins précurseurs respectifs de l'iode et de l'oxyde d'azote. A titre d'exemples d'iodures et de nitrites des métaux alcalins, on peut citer les iodures et les nitrites de sodium et de potassium. Parmi ceux-ci, on donne la préférence aux iodures. Un inhibiteur inorganique fort tout particulièrement préféré est l'iodure de potassium, précurseur de l'iode.

Pour ce qui concerne l'instauration d'un pH acide, c'est-à-dire d'un pH ne dépassant pas 7, on sait qu'une acidification du milieu de polymérisation du chlorure de vinyle s'instaure spontanément lors du démarrage de la polymérisation en présence de faibles quantités d'oxygène résiduel. Si nécessaire, le pH acide du milieu de polymérisation peut être instauré par acidification au moyen d'acides non oxydants, tels que les acides chlorhydrique, sulfurique ou phosphorique, utilisés en quantité appropriée.

La quantité globale d'inhibiteur fort à mettre en oeuvre par cycle de polymérisation dépendra bien entendu dans chaque cas particulier des conditions générales de la polymérisation et, en particulier, de la température de polymérisation et de la nature et la quantité d'initiateur radicalaire oléosoluble. A titre indicatif, la quantité globale d'inhibiteur inorganique fort à mettre en oeuvre pour la régulation directe de la température du milieu de polymérisation au cours d'un cycle de polymérisation ne dépassera généralement pas 75 ppm environ, le plus souvent, elle ne dépassera pas 60 ppm environ (ou les quantités équivalentes de précurseur) par rapport au chlorure de vinyle mis en oeuvre. Par ailleurs, la quantité globale d'inhibiteur inorganique fort à mettre en oeuvre au cours d'un cycle de polymérisation s'élèvera en général à au moins 2 ppm environ, le plus souvent 5 ppm environ (ou les quantités équivalentes de précurseur) par rapport au chlorure de vinyle mis en oeuvre.

Dans le cas où on fait appel à un précurseur d'inhibiteur, il conviendra bien entendu d'adapter les quantités afin de former in situ les quantités appropriées d'inhibiteur inorganique fort.

De la même manière, le débit en inhibiteur fort dépendra des conditions générales de la polymérisation et ne sera pas constant au cours de tout le cycle de polymérisation, l'injection d'inhibiteur ayant lieu au moment où la température de polymérisation dérive vers le haut. En règle générale, le débit horaire en inhibiteur inorganique fort ne dépassera pas 40 ppm environ par rapport au chlorure de vinyle mis en oeuvre (ou les quantités équivalentes en précurseur).

Un avantage appréciable du procédé selon la présente invention réside donc dans le fait que la température du milieu de polymérisation peut être régulée avec une grande précision indépendamment de la capacité de refroidissement disponible via la double enveloppe. En corollaire, le procédé selon l'invention permet une charge plus importante en initiateur qui résulte en une augmentation très appréciable de la productivité des réacteurs de polymérisation.

Le dispositif pour l'injection modulée de l'inhibiteur inorganique fort (ou de son précurseur) en réponse instantanée à une dérive de la température du milieu réactionnel n'est pas critique. L'injection d'inhibiteur pourra donc se faire par tout moyen de pilotage manuel ou automatique, le cas échéant informatisé, connu à cet effet. En pratique, le réservoir de stockage de l'inhibiteur inorganique fort (ou de son précurseur) sera mis sous une légère surpression, avantageusement sous une surpression d'azote, par exemple une surpression d'environ 1,2 bar, par rapport à la pression dans le réacteur de polymérisation. Le débit d'introduction de la solution aqueuse d'inhibiteur (ou de son précurseur) peut être ajusté, par exemple, via une vanne pneumatique et être mesuré au moyen d'un débitmètre massique.

Le moment où débute la régulation par l'injection directe de l'inhibiteur fort n'est pas critique. Généralement, la régulation directe sera instaurée dès que le réfrigérant de la navette a atteint un seuil de température préétabli, par exemple environ 20 ou 25 °C.

En dehors des aspects caractéristiques particuliers du procédé de l'invention décrits ci-dessus, les conditions générales de la polymérisation sont celles usuellement mises en oeuvre pour la polymérisation radicalaire du chlorure de vinyle à pH acide en dispersion aqueuse.

Par polymérisation du chlorure de vinyle, on entend désigner aux fins de la présente invention aussi bien l'homopolymérisation du chlorure de vinyle, que sa copolymérisation avec d'autres monomères éthyléniquement insaturés polymérisables par voie radicalaire. A titre d'exemples de comonomères usuels du chlorure de vinyle pouvant être mis en oeuvre dans le procédé de l'invention, on peut citer les oléfines, les oléfines halogénées, les éthers vinyliques, les esters vinyliques, ainsi que les esters, les nitriles et les amides acryliques. Les comonomères sont mis en oeuvre en des quantités n'excédant pas 50 % molaires, le plus souvent 35 % molaires du mélange de comonomères mis en oeuvre à la copolymérisation. Le procédé selon l'invention convient tout particulièrement pour l'homopolymérisation du chlorure de vinyle.

Par polymérisation radicalaire en dispersion aqueuse à l'intervention d'initiateurs radicalaires, on entend désigner les techniques bien connues de polymérisation en suspension aqueuse et en microsuspension aqueuse.

Dans la polymérisation en suspension aqueuse, on réalise la polymérisation à l'intervention d'initateurs liposolubles en présence d'agents dispersants conventionnels, tels que par exemple, des éthers cellulosiques hydrosolubles, des polyacétates de vinyle partiellement saponifiés (encore appelés "alcools polyvinyliques") et leurs mélanges. On peut aussi, en même temps que les agents dispersants mettre en oeuvre des agents tensioactifs. La quantité d'agent dispersant mise en oeuvre varie généralement entre 0,7 et 2,0 ‰ en poids par rapport au chlorure de vinyle mis en oeuvre.

Dans la polymérisation en microsuspension aqueuse, encore appelée parfois en dispersion aqueuse homogénéisée, on réalise une émulsion de gouttelettes de monomères, grâce à une agitation mécanique puissante et habituellement à la présence d'agents émulsionnants, tels que des agents émulsionnants anioniques, et on réalise la polymérisation à l'intervention d'initiateurs liposolubles.

Il est particulièrement avantageux d'appliquer le procédé de l'invention à la polymérisation en suspension aqueuse.

N'importe quel initiateur liposoluble peut être utilisé dans la polymérisation en suspension ou en microsuspension aqueuse selon le procédé de l'invention et ce en des quantités usuelles allant de 0,5 à 2,0 ‰ en poids environ ou même supérieures pouvant atteindre environ 4 ‰ par rapport au(x) monomère(s) mis en oeuvre. A titre d'exemples, on peut citer les peroxydes de dilauroyle et de dibenzoyle, les peroxyesters tels que les alkylperpivalates, les peroxydicarbonates ou encore les composés azoïques. Suivant un mode de réalisation préféré de l'invention l'initateur radicalaire olésoluble est choisi parmi les peroxydicarbonates de dialkyles et plus particulièrement parmi les peroxydicarbonates de dialkyles dont les groupements alkyles ne contiennent pas plus de 6 atomes de carbone. Des peroxydicarbonates de dialkyles tout particulièrement préférés sont ceux dont les groupements alkyles ne contiennent pas plus de 4 atomes de carbone. L'utilisation de tels initiateurs présente de multiples avantages. D'abord, du fait qu'ils présentent une très faible solubilité dans l'eau, néanmoins suffisante pour permettre la fabrication in situ de l'inhibiteur inorganique fort préféré, en l'occurence l'iode, à partir des iodures de métaux alcalins précurseurs. En outre, les résidus ou excès de tels peroxydicarbonates de dialkyles éventuellement présents dans le milieu de polymérisation à la fin du cycle et qui pourraient affecter la stabilité thermique des polymères du chlorure de vinyle issus du procédé sont aisément détruits par simple alcalinisation du milieu en fin de cycle de polymérisation. Pour ce faire, on utilise de manière connue en soi un hydroxyde de métal alcalin ou d'ammonium, la préférence étant donnée à ce dernier dont l'usage présente l'avantage supplémentaire, par comparaison avec les hydroxydes de métaux alcalins, de ne pas affecter les propriétés électriques des polymères du chlorure de vinyle.

Il est donc tout particulièrement préféré d'appliquer le procédé de l'invention à la régulation thermique de l'homopolymérisation du chlorure de vinyle en suspension aqueuse à l'intervention de peroxydicarbonates de dialkyles dont les chaînes alkyles ne contiennent pas plus de 4 atomes de carbone et, par ailleurs, d'utiliser comme inhibiteur inorganique fort pour la régulation directe de la température du milieu de polymérisation (au moins) un iodure de métal alcalin, précurseur de l'iode, mis en oeuvre sous la forme d'une solution aqueuse diluée.

Comme expliqué ci-dessus, le pH acide (désignant ici un pH ne dépassant pas 7) s'instaure dans certains cas naturellement en fonction de la quantité d'oxygène résiduaire présent dans le réacteur avant polymérisation. Si nécessaire, des quantités appropriées d'acide inorganique non oxydant sont introduits dans le milieu pour instaurer le pH acide. Avantageusement, on instaure un pH compris entre 3 et 5 environ.

La température de polymérisation est habituellement comprise entre environ 40 et 80 °C. Le procédé selon l'invention est particulièrement approprié pour la polymérisation à des températures inférieures à 65 °C et plus particulièrement encore inférieures à 55 °C qui sont précisément celles auxquelles le phénomène d'autoaccélération en fin de polymérisation est le plus accentué. La quantité d'eau mise en oeuvre est en général telle que le poids total d'eau représente de 50 à 65 % du poids total de l'eau et des monomères.

Les polymères du chlorure de vinyle obtenus suivant le procédé de l'invention sont isolés de manière conventionnelle de leur milieu de polymérisation, généralement après avoir été soumis à une épuration en monomère(s) résiduaire(s).

Le procédé selon l'invention permet donc une régulation très précise et aisément pilotable de la température du milieu de polymérisation, en particulier en vue d'une conduite isotherme de la polymérisation, qui permet de s'affranchir de la capacité de refroidissement disponible via la double enveloppe et qui conduit à des gains en productivité très appréciables, le plus souvent de l'ordre de 20 voire 25 %.

Les exemples qui suivent sont destinés à illustrer l'invention.

### Exemples 1 à 3

Les exemples 1 à 3 concernent la polymérisation en suspension aqueuse du chlorure de vinyle à 53 °C à l'intervention de peroxydicarbonate de diéthyle (EPC) à titre d'initiateur.

Dans l'exemple 1, selon l'invention, la température du milieu de polymérisation a été régulée essentiellement par injection directe d'iodure de potassium.

Dans l'exemple 2, donné à titre comparatif, un inhibiteur faible a été mis en oeuvre au départ de la polymérisation.

Dans l'exemple 3, également donné à titre comparatif, aucun inhibiteur n'a été mis en oeuvre à la polymérisation, de sorte que la température du milieu de polymérisation a été régulée à la seule intervention de l'eau de refroidissement circulant en navette dans la double enveloppe.

Dans les exemples 2 et 3, donnés à titre comparatif, les quantités d'initiateur ont été adaptées de manière à ce que le gradient de température maximum atteint au cours du cycle de polymérisation soit du même ordre de grandeur que celui atteint dans l'exemple 1, le gradient de température désignant la différence de température entre le milieu de polymérisation et l'eau de refroidissement circulant en navette dans la double enveloppe.

### Exemple 1

Dans un réacteur d'une capacité de 3,9 m³, équipé d'un agitateur et d'une double enveloppe, on introduit à température ambiante et sous agitation (50t/min) 1860 kg d'eau déminéralisée, 1,50 kg d'alcool polyvinylique et 0,90 kg de peroxydicarbonate de diéthyle (EPC). On ferme le réacteur, on arrête l'agitation et on met le réacteur sous un vide partiel (60 mmHg absolus) que l'on maintient pendant 5 minutes. On met l'agitation en marche (100t/min) et on introduit alors 1330 kg de chlorure de vinyle. On chauffe ensuite le milieu à 53 °C, après quoi on fait circuler de l'eau froide dans la double enveloppe. Le moment où le milieu de polymérisation atteint 53 °C est considéré comme le début du cycle de polymérisation (= temps tₒ).

A tₒ + 2 heures 15 minutes, lorsque la température de l'eau de réfrigération circulant en navette dans la double enveloppe a atteint le seuil de 20 °C (proche du minimum en température disponible à ce moment), on commute vers la régulation de la température du milieu de polymérisation par injection régulée d'une solution aqueuse à 1g/l d'iodure de potassium dans le milieu de polymérisation.

Après 3 h 30 minutes de marche (comptées à partir de tₒ), la pression dans le réacteur a baissé de 1,5 kg/cm². On arrête la polymérisation en effectuant succesivement : une introduction de 0,35 kg d'ammoniac, le dégazage du chlorure de vinyle non converti et le refroidissement. Le polychlorure de vinyle produit est isolé de manière conventionnelle de la suspension aqueuse.

Le débit en iodure de potassium pour maintenir constante la température du milieu a évolué entre 0 et 25 ppm/h et la quantité totale d'iodure injectée au cours du cycle de polymérisation s'est élevée à 24 ppm.

Le tableau I ci-après reprend les conditions générales de la polymérisation, à savoir la nature et la dose d'initateur, exprimée en ‰, la nature et la dose totale d'inhibiteur exprimée en ppm par rapport au chlorure de vinyle mis en oeuvre, la durée de la polymérisation à pression constante et la durée totale pour atteindre une chute de pression de 1,5 kg/cm² et, enfin, le gradient de température moyen et maximum, c'est-à-dire la différence de température en degrés C moyenne et maximum entre le milieu réactionnel, soit 53 °C dans tous les exemples, et la température de l'eau de refroidissement circulant dans la double enveloppe. Il est à remarquer que la différence entre le gradient maximum et le gradient moyen ne s'élève qu'à quelques degrés C. L'essentiel de la régulation thermique du milieu réactionnel s'est donc effectué par le biais de l'injection directe de la solution aqueuse d'iodure de potassium représentant au total l'équivalent d'environ 18 ppm d'iode.

### Exemple 2 (comparatif)

Cet exemple est conforme en tous points à l'exemple 1, si ce n'est qu'au lieu de réguler la température du milieu réactionnel par l'injection d'un inhibiteur inorganique fort, on a mis en oeuvre au départ de la polymérisation un inhibiteur faible, en l'occurence, le 2,6-ditert-butyl-p-hydroxytoluène (BHT), incorporé dans la charge initiale à raison de 150 ppm et que la dose en EPC a été réduite de 40 % (soit 0,54 kg) pour obtenir un gradient de température maximum similaire à celui obtenu à l'exemple 1.

La durée de réaction nécessaire pour une chute de pression de 1,5 kg/cm² (cf exemple 1) s'est élevée à 5 h 35 min (cf Tableau I).

### Exemple 3 (comparatif)

Cet exemple est identique en tous points à l'exemple 1, si ce n'est qu'aucun régulateur n'a été mis en oeuvre et que la quantité d'initiateur a été réduite de 60 % (soit 0,34 kg) pour obtenir un gradient de température maximum similaire à celui obtenu à l'exemple 1.

La durée de polymérisation totale (jusqu'à une chute de pression de 1,5 kg/cm²) s'est élevée à 6 h 30 min.

### Exemples 4 et 5

Les exemples 4 et 5 concernent la polymérisation en suspension aqueuse à 53 °C à l'intervention de peroxydicarbonate de myristyle (MYPC).

Dans l'exemple 4, selon l'invention, la température du milieu de polymérisation a été régulée essentiellement par le biais de l'injection directe d'iode. Dans l'exemple 5, donné à titre comparatif, aucun inhibiteur n'a été mis en oeuvre et la température du milieu de polymérisation a été régulée à la seule intervention de l'eau de refroidissement circulant dans la double enveloppe.

### Exemple 4

Cet exemple est conforme à l'exemple 1, si ce n'est qu'on met en oeuvre 2,13 kg de MYPC.

A to + 1 h 30 min, lorsque la température de l'eau de refroidissement a atteint 28 °C (proche du minimum en température disponible à ce moment), on démarre l'injection d'une solution aqueuse à 0,2g/l d'iode. La durée totale de polymérisation correspondant à une chute de pression de 1,5 kg/cm² s'est élevée à 4 h 35 min.

Le débit en iode a varié entre 0 et 10 ppm/h et la quantité totale d'iode injectée s'est élevée à 18 ppm.

### Exemple 5 (comparatif)

Cet exemple est conforme à l'exemple 4, si ce n'est qu'il est effectué en l'absence de tout inhibiteur et que la quantité d'initiateur MYPC a été réduite d'environ 50 % (soit 1,05 kg).

La durée totale de polymérisation jusqu'à une chute de pression de 1,5 kg/cm² s'est élevée à 6 h 15 minutes (cf Tableau I).

La comparaison des résultats des exemples 1 et 4 avec ceux respectivement des exemples de comparaison 2, 3 et 5 font clairement apparaître le gain très substantiel en productivité du réacteur que procure le procédé selon l'invention.

La stabilité thermique à 190 °C des polychlorures de vinyle issus des exemples 1 et 3 (comparatif) a été évaluée sur des crêpes obtenus par malaxage sur un malaxeur à cylindres pendant 30 min à 180 °C de la composition suivante :

| Constituant | Parties en poids |
|---|---|
| Polychlorure de vinyle | 100 |
| Phtalate de dioctyle | 60 |
| Processing-aid | 2 |
| Lubrifiant | 0,2 |
| Stabilisant octyl-étain | 2 |

La stabilité thermique à 190 °C de la composition comprenant du polychlorure de vinyle produit selon l'exemple 1 s'élève à 38 min, celle de la composition comprenant du polychlorure de vinyle produit à l'exemple comparatif 3 s'élève à 36 min.

La stabilité thermique à 190 °C, exprimée en minutes, représente la durée de maintien du crêpe à 190 °C avant qu'il ne noircisse.

**TABLEAU 1**

| N° de l'ex. | Initiateur | | Inhibiteur | | Durée de pol. | | Gradient de temp. , °C | |
|---|---|---|---|---|---|---|---|---|
| | Nature | Dose, ‰ | Nature | Dose, ppm | à pression constante | totale | moyen | max. |
| 1 | EPC | 0,68 | KI | 24 | 3 h 20 min | 3 h 50 min | 26,5 | 33 |
| 2 | EPC | 0,41 | BHT | 150 | 4 h 45 min | 5 h 35 min | 18,3 | 31 |
| 3 | EPC | 0,26 | néant | néant | 5 h 10 min | 6 h 30 min | 15,0 | 30 |
| 4 | MYPC | 1,60 | I₂ | 18 | 4 h 10 min | 4 h 35 min | 21,1 | 31 |
| 5 | MYPC | 0,78 | néant | néant | 5 h 30 min | 6 h 15 min | 15,7 | 31 |

## Revendications

1. Procédé pour la polymérisation radicalaire du chlorure de vinyle à pH acide en dispersion aqueuse à l'intervention d'initiateurs oléosolubles avec régulation de la température du milieu de polymérisation, caractérisé en ce que la température du milieu de polymérisation est régulée essentiellement par injection directe et modulée en réponse instantanée à une dérive vers le haut de la température du milieu de polymérisation d'un inhibiteur inorganique fort de la polymérisation radicalaire ou d'un précurseur d'un tel inhibiteur en quantité efficace pour réguler la température.

2. Procédé pour la polymérisation radicalaire du chlorure de vinyle selon la revendication 1, caractérisé en ce que l'inhibiteur inorganique fort est choisi parmi l'iode, le monoxyde d'azote et leurs précurseurs respectifs les iodures et les nitrites des métaux alcalins.

3. Procédé pour la polymérisation radicalaire du chlorure de vinyle selon la revendication 2, caractérisé en ce que l'inhibiteur inorganique fort est choisi parmi les iodures et les nitrites des métaux alcalins précurseurs respectifs de l'iode et du monoxyde d'azote.

4. Procédé pour la polymérisation radicalaire du chlorure de vinyle selon la revendication 3, caractérisé en ce que l'inhibiteur inorganique fort est choisi parmi les iodures des métaux alcalins, précurseurs de l'iode.

5. Procédé pour la polymérisation radicalaire du chlorure de vinyle selon la revendication 1, caractérisé en ce que l'inhibiteur inorganique fort ou son précursuer sont mis en oeuvre sous la forme de solutions aqueuses diluées.

6. Procédé pour la polymérisation radicalaire du chlorure de vinyle selon la revendication 1, caractérisé en ce que la quantité globale d'inhibiteur inorganique fort mise en oeuvre au cours d'un cycle de polymérisation ne dépasse pas 75 ppm environ par rapport au chlorure de vinyle ou la quantité équivalente de précurseur.

7. Procédé pour la polymérisation radicalaire du chlorure de vinyle selon la revendication 1, caractérisé en ce que la quantité globale d'inhibiteur inorganique fort mise en oeuvre au cours d'un cycle de polymérisation s'élève à au moins 2 ppm environ par rapport au chlorure de vinyle ou la quantité équivalente de précurseur.

8. Procédé pour la polymérisation radicalaire du chlorure de vinyle selon la revendication 1, caractérisé en ce qu'il est appliqué à la polymérisation en suspension aqueuse.

9. Procédé pour la polymérisation radicalaire du chlorure de vinyle selon la revendication 1, caractérisé en ce qu'il est appliqué à la polymérisation à l'intervention d'initiateurs oléosolubles choisis parmi les peroxydicarbonates de dialkyles dont les groupements alkyles ne contiennent pas plus de 6 atomes de carbone.

## Patentansprüche

1. Verfahren zur Radikalpolymerisation von Vinylchlorid bei saurem pH-Wert in wäßriger Dispersion unter der Beteiligung öllöslicher Initiatoren mit Regulierung der Temperatur des Polymerisationsmediums, dadurch gekennzeichnet, daß die Temperatur des Polymerisationsmediums im wesentlichen durch direktes Einspritzen geregelt wird und in unmittelbarer Antwort auf eine Abweichung zu höherer Temperatur des Polymerisationsmediums von einem starken anorganischen Inhibitor der Radikalpolymerisation oder von einer Vorstufe eines solchen Inhibitors in einer zur Regulierung der Temperatur wirksamen Menge verändert wird.

2. Verfahren zur Radikalpolymerisation von Vinylchlorid gemäß Anspruch 1, dadurch gekennzeichnet, daß der starke anorganische Inhibitor unter lod, Stickstoffmonoxid und deren entsprechenden Vorstufen, den Alkalimetalliodiden und -nitriten, ausgewählt ist.

3. Verfahren zur Radikalpolymerisation von Vinylchlorid gemäß Anspruch 2, dadurch gekennzeichnet, daß der starke anorganische Inhibitor unter den Alkalimetalliodiden und -nitriten, entsprechenden Vorstufen des lods und des Stickstoffmonoxids, ausgewählt ist.

4. Verfahren zur Radikalpolymerisation von Vinylchlorid gemäß Anspruch 3, dadurch gekennzeichnet, daß der starke anorganische Inhibitor unter den Alkalimetalliodiden, Vorstufen des lods, ausgewählt ist.

5. Verfahren zur Radikalpolymerisation von Vinylchlorid gemäß Anspruch 1, dadurch gekennzeichnet, daß der starke anorganische Inhibitor oder seine Vorstufe in Form von verdünnten wäßrigen Lösungen verwendet wird.

6. Verfahren zur Radikalpolymerisation von Vinylchlorid gemäß Anspruch 1, dadurch gekennzeichnet, daß die Gesamtmenge an starkem anorganischem Inhibitor oder die äquivalente Vorstufenmenge, die im Verlauf eines Polymerisationszyklus verwendet wird, bezogen auf Vinylchlorid, 75 ppm nicht überschreitet.

7. Verfahren zur Radikalpolymerisation von Vinylchlorid gemäß Anspruch 1, dadurch gekennzeichnet, daß die Gesamtmenge an starkem anorganischem Inhibitor oder die äquivalente Vorstufenmenge, die im Verlauf eines Polymeristionszyklus verwendet wird, bezogen auf das Vinylchlorid, sich auf wenigstens ungefähr 2 ppm beläuft.

8. Verfahren zur Radikalpolymerisation von Vinylchlorid gemäß Anspruch 1, dadurch gekennzeichnet, daß es auf die Polymerisation in wäßriger Suspansion angewendet wird.

9. Verfahren zur Radikalpolymerisation von Vinylchlorid gemäß Anspruch 1, dadurch gekennzeichnet, daß es auf die Polymerisation unter Beteiligung öllöslicher Initiatoren, die unter den Dialkyl-Peroxydicarbonaten, deren Alkylgruppen nicht mehr als 6 Kohlenstoffatome enthalten, ausgewählt sind, angewendet wird.

## Claims

1. Process for the radical polymerization of vinyl chloride at acid pH in aqueous dispersion with the involvement of oil-soluble initiators with control of the temperature of the polymerization medium, characterized in that the temperature of the polymerization medium is essentially controlled by direct injection, modified in instantaneous response to a upward drift of the temperature of the polymerization medium, of an effective amount of a strong inorganic inhibitor of the radical polymerization or a precursor of such an inhibitor.

2. Process for the radical polymerization of vinyl chloride according to Claim 1, characterized in that the strong inorganic inhibitor is chosen from iodine, nitrogen monoxide and their respective alkali metal iodide and nitrite precursors.

3. Process for the radical polymerization of vinyl chloride according to Claim 2, characterized in that the strong inorganic inhibitor is chosen from alkali metal iodides and nitrites, which are the respective precursors of iodine and of nitrogen monoxide.

4. Process for the radical polymerization of vinyl chloride according to Claim 3, characterized in that the strong inorganic inhibitor is chosen from alkali metal iodides, which are precursors of iodine.

5. Process for the radical polymerization of vinyl chloride according to Claim 1, characterized in that the strong inorganic inhibitor or its precursor are used in the form of dilute aqueous solutions.

6. Process for the radical polymerization of vinyl chloride according to Claim 1, characterized in that the overall amount of strong inorganic inhibitor used in the course of a polymerization cycle does not exceed approximately 75 ppm or the equivalent amount of precursor with respect to the vinyl chloride.

7. Process for the radical polymerization of vinyl chloride according to Claim 1, characterized in that the overall amount of strong inorganic inhibitor used in the course of a polymerization cycle amounts to at least approximately 2 ppm or the equivalent amount of precursor with respect to the vinyl chloride.

8. Process for the radical polymerization of vinyl chloride according to Claim 1, characterized in that it is applied to aqueous suspension polymerization.

9. Process for the radical polymerization of vinyl chloride according to Claim 1, characterized in that it is applied to the polymerization with the involvement of oil-soluble initiators chosen from dialkyl peroxydicarbonates whose alkyl groups do not contain more than 6 carbon atoms.
